# EUROPEAN PATENT APPLICATION

(11) **EP 4 422 249 A1**
(43) Date of publication of application: **28.08.2024**
(21) Application number: 22882938.8
(22) Date of filing: 20.10.2022
(51) Int. Cl.: H04W 24/02

(54) **CHANNEL STATE INFORMATION (CSI) MEASUREMENT METHOD, TERMINAL, AND NETWORK SIDE DEVICE**

(30) Priority: 22.10.2021 CN 202111234363
(71) Applicant: VIVO MOBILE COMMUNICATION CO., LTD., Dongguan, Guangdong 523863 (CN)
(72) Inventor: ZHENG, Kaili, Dongguan, Guangdong 523863 (CN); YUAN, Jiangwei, Dongguan, Guangdong 523863 (CN); REN, Qianyao, Dongguan, Guangdong 523863 (CN); TAMRAKAR, Rakesh, Dongguan, Guangdong 523863 (CN)
(74) Representative: Conti, Marco
(86) International application number: PCT/CN2022/126397
(87) International publication number: WO 2023/066333

(57) **Abstract**

This application discloses a channel state information CSI measurement method, a terminal, and a network-side device, and pertains to the field of communication technologies. The CSI measurement method of embodiments of this application includes: sending, by the network-side device, CSI measurement configuration information to the terminal, where the CSI measurement configuration information is used for configuring a target CSI measurement resource associated with measurement of target CSI information; and receiving, by the network-side device, the target CSI information from the terminal. The target CSI information includes at least one of the following: Doppler shift, Doppler spread, Doppler spectrum, time domain channel correlation matrix, delay spread, average delay, delay spectrum, and frequency domain channel correlation matrix.

## Description

### CROSS-REFERENCE TO RELATED APPLICATIONS

This application claims priority to Chinese Patent Application No. 202111234363.8, filed in China on October 22, 2021, which is incorporated herein by reference in its entirety.

### TECHNICAL FIELD

This application pertains to the field of communication technologies and specifically relates to a channel state information CSI measurement method, a terminal, and a network-side device.

### BACKGROUND

In the related new radio (New Radio, NR) technologies, channel state information (Channel State Information, CSI) such as precoding matrix indicator (Precoding Matrix Indicator, PMI), rank indicator (Rank Indicator, RI), and channel quality indicator (Channel Quality Indicator, CQI) is reported to a network-side device by user equipment (User Equipment, UE). In this way, the network-side device can apply the CSI information reported by the UE to subsequent data transmission.

However, in a CSI reporting period, if the channel state between the UE and the network-side device changes (for example, the channel state changes in scenarios in which the UE is moving at high speed), the network-side device can use only CSI information reported by the UE last time until CSI information is reported next time and becomes valid. At this point, there is a problem of mismatch between the CSI information reported by the UE last time and the current channel state, so that precoding, modulation order, bit rate, and the like adjusted based on this CSI information cannot well match data transmission after the change of the channel state.

### SUMMARY

Embodiments of this application provide a channel state information CSI measurement method, a terminal, and a network-side device, so as to configure measurement and reporting of CSI enhancement information by the terminal. In this way, the network-side device can perform channel prediction and other processing based on the CSI enhancement information, thereby correspondingly adjusting precoding, modulation order, bit rate, and the like for data transmission, so as to better match channel state changes.

According to a first aspect, a channel state information CSI measurement method is provided, where the method includes:
sending, by a network-side device, CSI measurement configuration information to a terminal, where the CSI measurement configuration information is used for configuring a target CSI measurement resource associated with measurement of target CSI information; and
receiving, by the network-side device, the target CSI information from the terminal; where
the target CSI information includes at least one of the following:
   Doppler shift, Doppler spread, Doppler spectrum, time domain channel correlation matrix, delay spread, average delay, delay spectrum, and frequency domain channel correlation matrix.

According to a second aspect, a channel state information CSI measurement apparatus is provided and applied to a network-side device, where the apparatus includes:
a first sending module configured to send CSI measurement configuration information to a terminal, where the CSI measurement configuration information is used for configuring a target CSI measurement resource associated with measurement of target CSI information; and
a first receiving module configured to receive the target CSI information from the terminal; where
the target CSI information includes at least one of the following:
   Doppler shift, Doppler spread, Doppler spectrum, time domain channel correlation matrix, delay spread, average delay, delay spectrum, and frequency domain channel correlation matrix.

According to a third aspect, a channel state information CSI measurement method is provided, where the method includes:
receiving, by a terminal, CSI measurement configuration information from a network-side device;
measuring, by the terminal, target CSI information on a target CSI measurement resource based on the CSI measurement configuration information; and
sending, by the terminal, the target CSI information to the network-side device; where
the target CSI information includes at least one of the following:
   Doppler shift, Doppler spread, Doppler spectrum, time domain channel correlation matrix, delay spread, average delay, delay spectrum, and frequency domain channel correlation matrix.

According to a fourth aspect, a channel state information CSI measurement apparatus is provided and applied to a terminal, where the apparatus includes:
a second receiving module configured to receive CSI measurement configuration information from a network-side device;
a measurement module configured to measure target CSI information on a target CSI measurement resource based on the CSI measurement configuration information; and
a fourth sending module configured to send the target CSI information to the network-side device; where
the target CSI information includes at least one of the following:
   Doppler shift, Doppler spread, Doppler spectrum, time domain channel correlation matrix, delay spread, average delay, delay spectrum, and frequency domain channel correlation matrix.

According to a fifth aspect, a network-side device is provided, where the network-side device includes a processor, a memory, and a program or instructions stored in the memory and capable of running on the processor, and when the program or instructions are executed by the processor, the steps of the method according to the first aspect are implemented.

According to a sixth aspect, a network-side device is provided, including a processor and a communication interface, where the communication interface is configured to send CSI measurement configuration information to a terminal, where the CSI measurement configuration information is used for configuring a target CSI measurement resource associated with measurement of target CSI information; and the communication interface is further configured to receive the target CSI information from the terminal, where the target CSI information includes at least one of the following:
Doppler shift, Doppler spread, Doppler spectrum, time domain channel correlation matrix, delay spread, average delay, delay spectrum, and frequency domain channel correlation matrix.

According to a seventh aspect, a terminal is provided, where the terminal includes a processor, a memory, and a program or instructions stored in the memory and capable of running on the processor, and when the program or instructions are executed by the processor, the steps of the method according to the third aspect are implemented.

According to an eighth aspect, a terminal is provided, including a processor and a communication interface, where the communication interface is configured to receive CSI measurement configuration information from a network-side device; the processor is configured to measure target CSI information on a target CSI measurement resource based on the CSI measurement configuration information; and the communication interface is further configured to send the target CSI information to the network-side device, where the target CSI information includes at least one of the following:
Doppler shift, Doppler spread, Doppler spectrum, time domain channel correlation matrix, delay spread, average delay, delay spectrum, and frequency domain channel correlation matrix.

According to a ninth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions to implement the method according to the first aspect or the method according to the third aspect.

According to an eleventh aspect, a computer program/program product is provided, where the computer program/program product is stored in a non-transitory storage medium, and the program/program product is executed by at least one processor to implement the steps of the channel state information CSI measurement method according to the first aspect or the steps of the channel state information CSI measurement method according to the third aspect.

According to a twelfth aspect, a communication device is provided, where the communication device is configured to perform the channel state information CSI measurement method according to the first aspect or the channel state information CSI measurement method according to the third aspect.

In the embodiments of this application, the network-side device sends CSI measurement configuration information to the terminal, where the CSI measurement configuration information is used for configuring a target CSI measurement resource associated with measurement of target CSI information; and the network-side device receives the target CSI information from the terminal; where the target CSI information includes at least one of the following: Doppler shift, Doppler spread, Doppler spectrum, time domain channel correlation matrix, delay spread, average delay, delay spectrum, and frequency domain channel correlation matrix. In this way, the network-side device can configure enhancement of CSI measurement and reporting by the terminal, so that the terminal can obtain, through measurement, target CSI information such as Doppler shift, Doppler spread, Doppler spectrum, time domain channel correlation matrix, delay spread, average delay, delay spectrum, and frequency domain channel correlation matrix over the target CSI measurement resource, and can report the target CSI information to the network-side device. This enables the network-side device to predict, based on the target CSI information, a channel state change corresponding to the terminal, and then to adjust precoding, modulation order, bit rate, and the like based on the predicted channel state, so as to better match data transmission after the channel state change.

### BRIEF DESCRIPTION OF DRAWINGS

FIG. 1 is a block diagram of a wireless communication system to which the embodiments of this application are applicable;
FIG. 2 is a flowchart of a CSI measurement method according to an embodiment of this application;
FIG. 3a is a schematic diagram of a resource structure of a first target CSI measurement resource;
FIG. 3b is a schematic diagram of a resource structure of a second target CSI measurement resource;
FIG. 3c is a schematic diagram of a resource structure of a third target CSI measurement resource;
FIG. 3d is a schematic diagram of a resource structure of a fourth target CSI measurement resource;
FIG. 4a is a schematic diagram of mapping of a fifth target CSI measurement resource in time-frequency domain;
FIG. 4b is a schematic diagram of mapping of a sixth target CSI measurement resource in time-frequency domain;
FIG. 5 is a flowchart of another CSI measurement method according to an embodiment of this application;
FIG. 6 is a schematic structural diagram of a first CSI measurement apparatus according to an embodiment of this application;
FIG. 7 is a schematic structural diagram of a second CSI measurement apparatus according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "first" and "second" are typically used to distinguish objects of a same type and do not limit quantities of the objects. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purposes, and NR terms are used in most of the following descriptions, although these technologies may also be applied to other applications than the NR system application, for example, the 6th generation (6^{th} Generation, 6G) communication system.

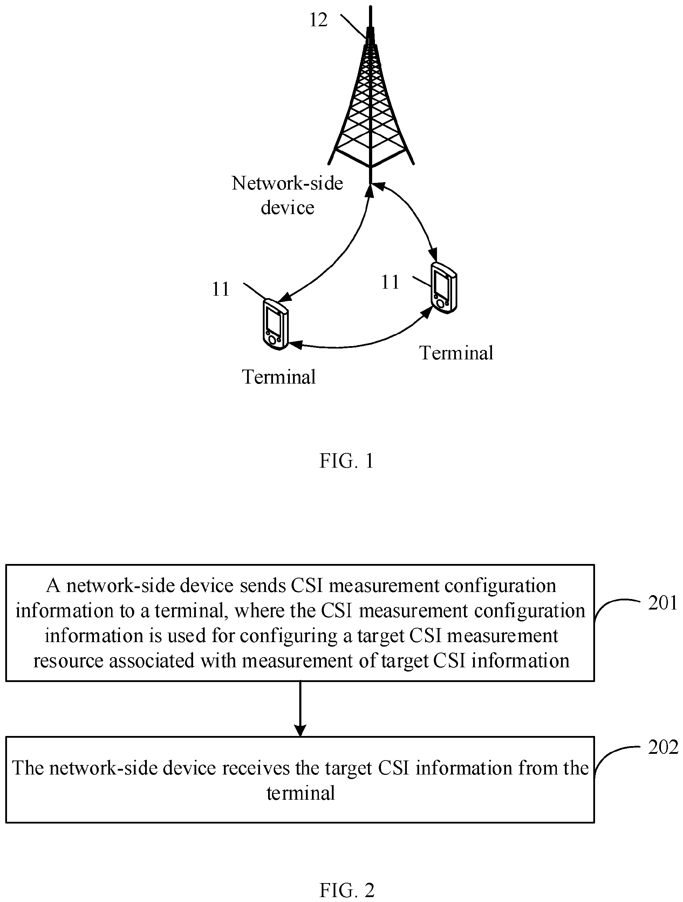

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), or a smart appliance (a home appliance with a wireless communication function, for example, a refrigerator, a television, a washing machine, or furniture). The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, a game console, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (wireless fidelity, WiFi) node, a transmission and reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following describes in detail a CSI measurement method, CSI measurement apparatus, terminal, network-side device, and readable storage medium provided in the embodiments of this application through some embodiments and application scenarios thereof with reference to the accompanying drawings.

Refer to FIG. 2. A CSI measurement method provided in an embodiment of this application may be performed by a network-side device. As shown in FIG. 2, the CSI measurement method may include the following steps.

Step 201. A network-side device sends CSI measurement configuration information to a terminal, where the CSI measurement configuration information is used for configuring a target CSI measurement resource associated with measurement of target CSI information. The target CSI information includes at least one of the following:
Doppler shift, Doppler spread, Doppler spectrum, time domain channel correlation matrix, delay spread, average delay, delay spectrum, and frequency domain channel correlation matrix.

Step 202. The network-side device receives the target CSI information from the terminal.

It should be noted that before reporting the target CSI information to the network-side device, the terminal can also perform data processing such as quantization and compression or perform data conversion on the target CSI information. In this case, that the network-side device receives the target CSI information from the terminal can be understood as: the network-side device receives the target CSI information that has undergone the data processing or data conversion from the terminal. For example, the terminal converts the target CSI information obtained through measurement into a codebook for precoding, and reports the converted codebook to the network-side device. A specific form of reporting the target CSI information by the terminal is not limited herein.

In implementation, the channel experiences changes in frequency domain and/or time domain, while the terminal can perform only periodic, aperiodic, or semi-persistent CSI reporting. In this embodiment of this application, a target CSI measurement resource can be configured for the terminal, so that the terminal can measure time-domain characteristics and/or frequency-domain characteristics of the channel more accurately over the resource, and report the measured time-domain characteristics and/or frequency-domain characteristics of the channel to the network-side device, enabling the network-side device to learn about changing characteristics of the channel state based on the time-domain characteristics and/or frequency-domain characteristics measured by the terminal. In this way, after receiving the foregoing target CSI information reported by the terminal, the network-side device can predict a channel state change corresponding to the terminal, thereby correspondingly adjusting precoding, modulation order, bit rate, and the like for data transmission, so as to better match data transmission after the channel state change.

It should be noted that the CSI measurement method provided in this embodiment of this application and the CSI measurement method in the related art have at least the following differences.
(1) Reported CSI information in the prior art is different from the target CSI information in this embodiment of this application. Specifically, in the existing CSI measurement and reporting technologies, a network-side device configures that a terminal measures at least one of the following conventional CSI information over a CSI reference signal (CSI Reference Signal, CSI-RS) resource and a CSI interference measurement (CSI Interference Measurement, CSI-IM) resource: CSI-RS resource indicator (CSI-RS Resource Indicator, CRI), precoding matrix indicator (Precoding Matrix indicator, PMI), rank indicator (Rank Indicator, RI), channel quality indicator (Channel Quality Indicator, CQI), layer indicator (Layer Indicator, LI), reference signal received power (Reference Signal Received Power, RSRP), and signal-to-noise and interference ratio (Signal-to-Noise and Interference Ratio, SINR).
(2) The CSI resource used for measuring CSI information in the prior art is different from the target CSI measurement resource used for measuring the target CSI information in this embodiment of this application. Specifically, in the existing CSI measurement and reporting technologies, a CSI-RS configured by a network-side device for a terminal is used for configuring information such as a port quantity, time-frequency position, and the like of the CSI-RS. However, the CSI-RS in the prior art is not applicable to measurement requirements on Doppler shift, Doppler spread, Doppler spectrum, time domain channel correlation matrix, delay spread, average delay, delay spectrum, and frequency domain channel correlation matrix in this embodiment of this application.

Optionally, the target CSI measurement resource includes:
a CSI-RS resource;
a tracking reference signal (Tracking Reference Signal, TRS) resource; or
a reference signal resource combination.

In implementation, the target CSI measurement resource may be at least two CSI-RS resources or one CSI-RS resource that is used for at least two repetitions in time domain; may be a TRS resource; or may be a combination of a CSI-RS resource and a TRS resource, for example, a combination of one CSI-RS resource and one TRS resource set, a combination of one CSI-RS resource and at least two TRS resource sets, a combination of at least two CSI-RS resources and at least two TRS resource sets, or a combination of at least two CSI-RS resources and one TRS resource set.

### <Case 1>

In a case that the target CSI measurement resource is a CSI-RS resource, the number of the CSI-RS resource may be one or at least two, to be specific, one or at least two CSI-RS resources may be used for a same CSI measurement.

In some embodiments, in a case that the target CSI measurement resource includes at least two CSI-RS resources (for example, the target CSI measurement resource is at least two CSI-RS resources or the target CSI measurement resource is a combination of a TRS resource set and at least two CSI-RS resources), the CSI measurement configuration information includes at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

In specific implementation, that the target CSI measurement resource includes at least two CSI-RS resources can be understood as that the at least two CSI-RS resources are used for a same measurement.

Option 1. The first CSI-RS resource indication information may indicate the number of CSI-RS resources used for a same measurement.

Option 2. The second CSI-RS resource indication information may indicate index information such as IDs of CSI-RS resources in the at least two CSI-RS resources to distinguish the CSI-RS resources.

Option 3. The third CSI-RS resource indication information may indicate respective port quantities for the at least two CSI-RS resources, and the port quantities of different CSI-RS resources may be different from each other.

Optionally, a port quantity of a target CSI-RS resource in the at least two CSI-RS resources is X; and a port quantity of other CSI-RS resources than the target CSI-RS resource in the at least two CSI-RS resources is Y; where Y is equal to 1 or 2, and X is greater than or equal to Y

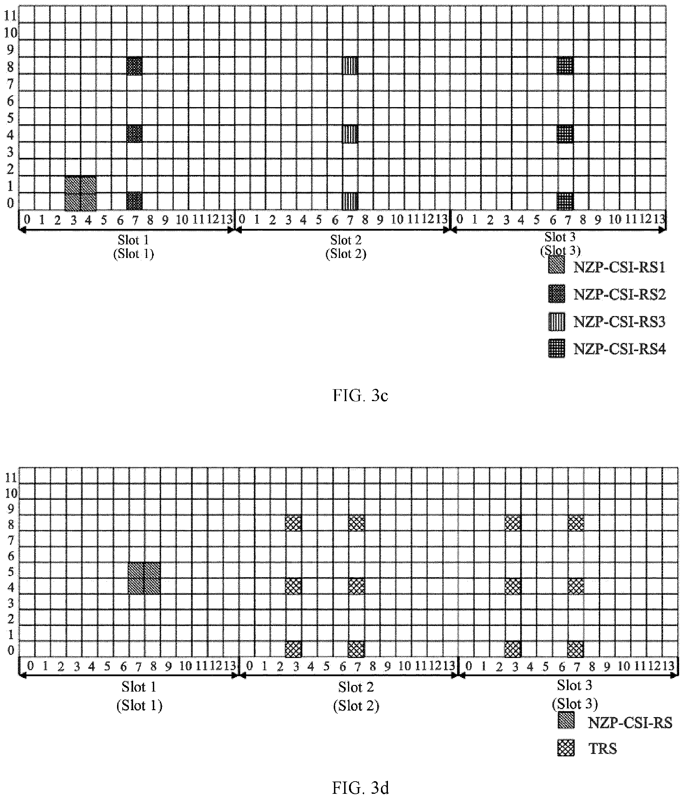

For example, as shown in FIG. 3c, non-zero power (Non-Zero Power, NZP) CSI-RS1 is a 4-port CSI-RS resource, and NZP CSI-RS2 to NZP CSI-RS4 are three 1-port CSI-RS resources.

In this implementation, it may be indicated that the port quantity of one CSI-RS resource in the at least two CSI-RS resources is greater than or equal to 1, and that the port quantity of the rest CSI-RS resources is 1; or it may be indicated that the port quantity of one CSI-RS resource in the at least two CSI-RS resources is greater than or equal to 2, and that the port quantity of the rest CSI-RS resources is 2.

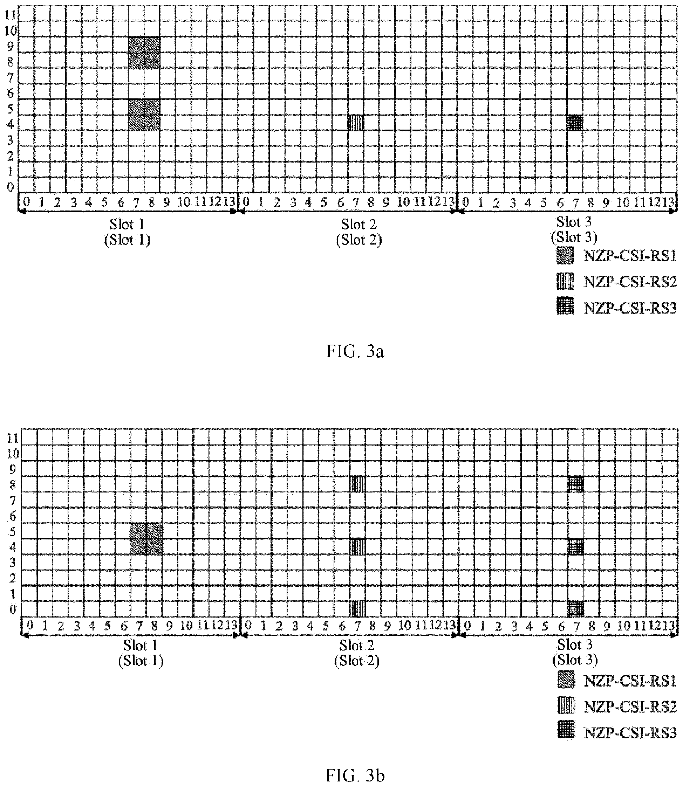

For example, as shown in FIG. 3a, it is assumed that the at least two CSI-RS resources include: NZP CSI-RS 1, NZP CSI-RS2, and NZP CSI-RS3, then NZP CSI-RS 1 is an 8-port CSI-RS resource, while NZP CSI-RS2 and NZP CSI-RS3 are two 1-port CSI-RS resources.

For another example, as shown in FIG. 3b, NZP CSI-RS1 is a 4-port CSI-RS resource, while NZP CSI-RS2 and NZP CSI-RS3 are two 1-port CSI-RS resources.

For another example, as shown in FIG. 3c, NZP CSI-RS1 is a 4-port CSI-RS resource, while NZP CSI-RS2, NZP CSI-RS3, and NZP CSI-RS4 are three 1-port CSI-RS resources.

In this implementation, the flexibility of the port quantities of the at least two CSI-RS resources can be improved, so as to be applicable to measurement of the target CSI resource.

Option 4. In implementation, the fourth CSI-RS resource indication information can be included in the CSI measurement configuration information to indicate the time domain gap between the at least two CSI-RS resources. Certainly, in implementation, in a case that the fourth CSI-RS resource indication information is not included in the CSI measurement configuration information, a time domain gap agreed by the network-side device and the terminal by default can also be adopted. This is not specifically limited herein.

Option 5. The fifth CSI-RS resource indication information may indicate respective occupied bandwidths for the at least two CSI-RS resources, and the occupied bandwidths of different CSI-RS resources may be different from each other.

Option 6. The sixth CSI-RS resource indication information may indicate respective frequency-domain densities for the at least two CSI-RS resources, and the frequency-domain densities of different CSI-RS resources may be different from each other.

The frequency-domain density may specifically include at least one of resource block (Resource Block, RB) occupancy density and subband (subband) occupancy density.

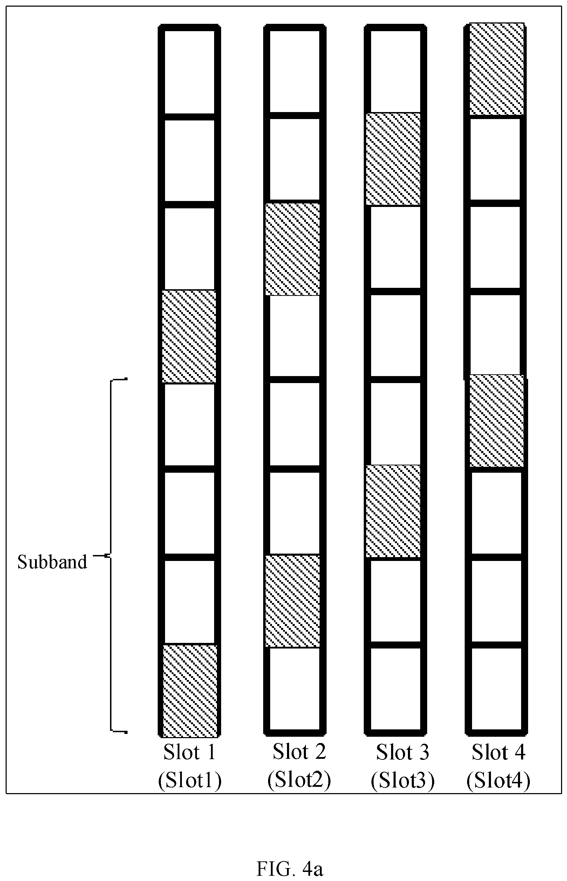

For example, it is assumed that the mapping of at least two CSI-RS resources corresponding to one measurement in time-frequency domain is as shown in FIG. 4a, and subband size = 4, where the frequency-domain position occupied by CSI-RSs in slot (slot) 1 is the 1st RB of each subband, the frequency-domain position occupied by CSI-RSs in slot 2 is the 2nd RB of each subband, the frequency-domain position occupied by CSI-RSs in slot 3 is the 3rd RB of each subband, and the frequency-domain position occupied by CSI-RSs in slot 4 is the 4th RB of each subband. In this case, the RB occupancy density of CSI-RSs is 1/4, that is, in one slot, CSI-RS resources appear once every four RBs.

It should be noted that for different RBs, subband sizes may be different, and correspondingly, RB occupancy densities may also be different. For example, when subband size = 4, the RB occupancy density of CSI-RSs may be 1, 1/2, or 1/4; when subband size = 8, the RB occupancy density of CSI-RSs may be 1, 1/2, 1/4, or 1/8; when subband size = 16, the RB occupancy density of CSI-RSs may be 1, 1/2, 1/4, 1/8, or 1/16; and when subband size = 32, the RB occupancy density of CSI-RSs may be 1, 1/2, 1/4, 1/8, 1/16, or 1/32.

In implementation, the subband size can be determined based on a bandwidth part (Bandwidth Part, BWP). For example, as shown in Table 1 below, the correspondence between BWP and subband size is as follows.

**Table 1**

| Bandwidth part (PRBs) | Subband size (PRBs) |
|---|---|
| 24-72 | 4, 8 |
| 73-144 | 8, 16 |
| 145-275 | 16, 32 |

The unit of BWP and subband size in Table 1 above is physical resource block (Physical Resource Block, PRB). It should be noted that the RB described in this embodiment of this application is PRB.

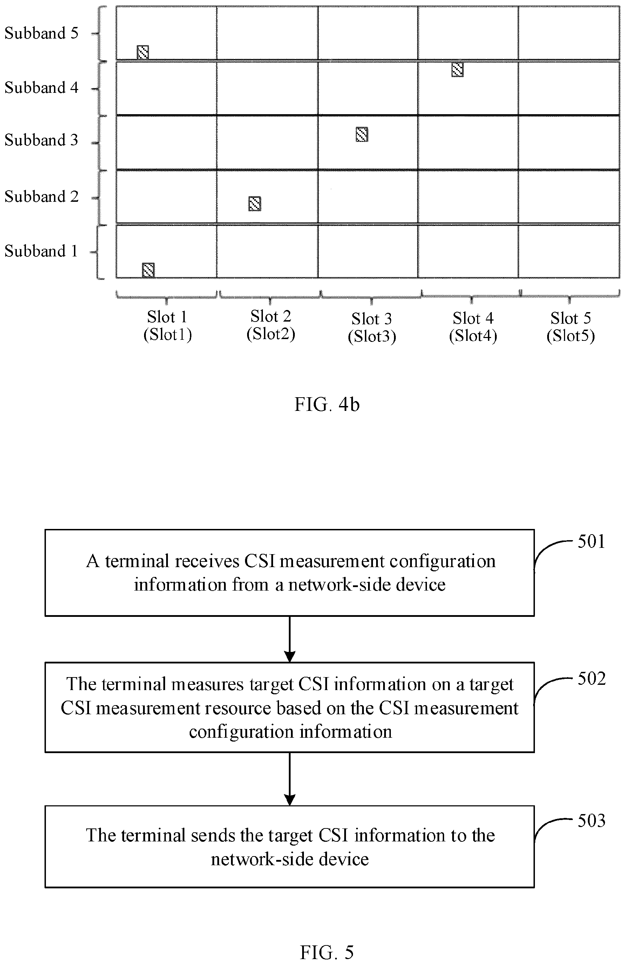

For another example, it is assumed that the mapping of at least two CSI-RS resources corresponding to one measurement in time-frequency domain is as shown in FIG. 4b, and subband size = 4, where the frequency-domain position occupied by CSI-RSs in slot 1 is the 1st RB of subband 1, the frequency-domain position occupied by CSI-RSs in slot 2 is the 2nd RB of subband 2, the frequency-domain position occupied by CSI-RSs in slot 3 is the 3rd RB of subband 3, and the frequency-domain position occupied by CSI-RSs in slot 4 is the 4th Rb of subband 4. Then this cycle is repeated over and over again. In this case, the subband occupancy density of CSI-RSs is 1/4, that is, in one slot, CSI-RS resources appear once every four subbands.

It should be noted that similar to the above RB occupancy density, different subband sizes may lead to different occupancy densities of the subband sizes. For example, when subband size = 4, the subband occupancy density of CSI-RSs may be 1/2 or 1/4; when subband size = 8, the subband occupancy density of CSI-RSs may be 1/2, 1/4, or 1/8; when subband size = 16, the subband occupancy density of CSI-RSs may be 1/2, 1/4, 1/8, or 1/16; and when subband size = 32, the subband occupancy density of CSI-RSs may be 1/2, 1/4, 1/8, 1/16, or 1/32.

It should be noted that in the embodiments shown in FIGs. 4a and 4b, CSI-RS resources located in four slots can be understood as four CSI-RS resources occupying different slots respectively, or can also mean that multiple time-domain repetitions of a same CSI-RS resource occupy different slots respectively.

Optionally, time-domain types of the at least two CSI-RS resources include at least one of the following:
periodic CSI-RS resource;
semi-persistent CSI-RS resource; and
aperiodic CSI-RS resource.

In this implementation, the at least two CSI-RS resources may include CSI-RS resources of the same or different time-domain types. In this way, the flexibility of distribution of the at least two CSI-RS resources in time domain can be improved, and the utilization of the at least two CSI-RS resources in time domain can be improved by making the at least two CSI-RS resources include CSI-RS resources of different time-domain types.

It should be noted that in a case that the at least two CSI-RS resources include CSI-RS resources of at least two time-domain types, the CSI measurement method further includes at least one of the following:
activating and/or deactivating a semi-persistent CSI-RS resource through a medium access control control element (Medium Access Control-Control Element, MAC CE); and
indicating, through downlink control information (Downlink Control Information, DCI), that an aperiodic CSI-RS resource becomes valid; where
the time-domain types include: periodic CSI-RS resource, aperiodic CSI-RS resource, and semi-persistent CSI-RS resource.

Different from CSI-RSs that can be transmitted periodically on periodic CSI-RS resources, activation or validity time needs to be indicated for semi-persistent CSI-RS resources and aperiodic CSI-RS resources, so that the terminal can perform measurement in the time when the semi-persistent CSI-RS resources and aperiodic CSI-RS resources are activated or valid. In this implementation, a semi-persistent CSI-RS resource can be activated and/or deactivated through MAC CE, or an aperiodic CSI-RS resource can be indicated to become valid through DCI, so that the terminal can perform measurement for the semi-persistent CSI-RS resource and the aperiodic CSI-RS resource.

Optionally, the CSI measurement configuration information further includes:
eighth CSI-RS resource indication information for indicating respective time-domain repetition counts of the configured at least two CSI-RS resources, where time-domain symbol positions occupied by the at least two CSI-RS resources in a same time-domain repetition are within a same slot.

In specific implementation, the time-domain repetition count may be a repetition count in a unit of slot, and the time-domain repetition counts of the at least two CSI-RS resources can be understood as that time-domain symbol positions occupied by the at least two CSI-RS resources in a same time-domain repetition may be allocated within one slot, and the network-side device may indicate that the time-domain repetition counts of all CSI-RS resources in the at least two CSI-RS resources are the same.

Further, the CSI measurement configuration information further includes:
ninth CSI-RS resource indication information for indicating a slot gap between the time-domain repetitions of the configured at least two CSI-RS resources.

In this implementation, on the basis that the time-domain symbol positions of the at least two CSI-RS resources may be allocated within one time slot, and the network-side device indicates the time-domain repetition counts of the CSI-RS resources, the network-side device can further indicate the slot gap between the time-domain repetitions corresponding to the at least two CSI-RS resources, so as to increase the distribution densities of the at least two CSI-RS resources in time domain.

Optionally, the CSI measurement method further includes:
sending, by the network-side device, first resource indication information to the terminal, wherein the first resource indication information is used for indicating that some CSI-RS resources in the at least two CSI-RS resources become valid or invalid.

In this implementation, in the case that at least two CSI-RS resources are configured, it can be indicated through the first resource indication information that some CSI-RS resources become valid or invalid, thus realizing flexible configuration of CSI-RS resources. For example, in a case that the at least two CSI-RS resources include four periodic CSI-RS resources, it can be indicated that two of the CSI-RS resources become invalid based on the measurement requirements, so as to avoid the waste of resources.

In some other embodiments, when the target CSI measurement resource includes a first CSI-RS resource (that is, there is only one CSI-RS resource in the target CSI measurement resource, for example, the target CSI measurement resource is one CSI-RS resource, or the target CSI measurement resource is a combination of a TRS resource set and one CSI-RS resource), the CSI measurement configuration information includes:
seventh CSI-RS resource indication information for indicating a time-domain repetition count of the configured first CSI-RS resource.

This implementation differs from the implementation in which the target CSI measurement resource is at least two CSI-RS resources in that only one CSI-RS resource is configured in this implementation, and at least two repetitions in time domain is configured for this one CSI-RS resource to meet the measurement requirements for the target CSI information.

Optionally, the time-domain repetitions of the first CSI-RS resource occur in one slot or N slots, where N is equal to the time-domain repetition count of the first CSI-RS resource.

In implementation, at least two time-domain repetitions may be performed within one slot for the first CSI-RS resource, or the time-domain repetitions of the first CSI-RS resource may span multiple slots, that is, each time-domain repetition corresponds to one slot. For example, in the embodiments shown in FIGs. 4a and 4b, the CSI-RS resources located in four slots may refer to four time-domain repetitions of a same CSI-RS resource. It should be noted that in the embodiments shown in FIGs. 4a and 4b, it can be seen that frequency domain resources occupied by four time-domain repetitions of the CSI-RS resource are different. While in other implementations, a more ordinary possible form is that four time-domain repetitions of the CSI-RS resource occupy the same frequency-domain resources.

Further, in a case that the time-domain repetitions of the first CSI-RS resource occur in one slot, the CSI measurement configuration information further includes at least one of the following:
tenth CSI-RS resource indication information for indicating that the time-domain repetitions occurring in one slot is performed for the configured first CSI-RS resource within L slot(s), where L is an integer greater than or equal to 1; and
eleventh CSI-RS resource indication information for indicating a symbol gap between the time-domain repetitions of the configured first CSI-RS resource.

L represents the number of slots for the time-domain repetitions, and at least two time-domain repetitions are separately performed within each slot for the first CSI-RS resource.

In addition, the eleventh CSI-RS resource indication information can indicate a symbol gap between two adjacent time-domain repetitions of the first CSI-RS resource, so as to adjust the accuracy of measurement that is based on the first CSI-RS resource.

In this implementation, the time-domain repetition count of the first CSI-RS resource in one slot or N slots can be indicated, and the distribution density of CSI-RS resources in time domain can be increased.

### <Case 2>

In a case that the target CSI measurement resource includes a TRS resource, for example, the target CSI measurement resource is at least two TRS resource sets, or the target CSI measurement resource is a combination of a TRS resource set and a CSI-RS resource, or the like, the CSI measurement configuration information includes at least one of the following TRS resource indication information:

Optionally, in a case that the target CSI measurement resource includes a TRS resource, the CSI measurement configuration information includes at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

In the prior art, TRS can be used for timing estimation, delay spread estimation, shift estimation, and Doppler spread estimation. The timing estimation and shift estimation can be used for completing synchronization between a transmitter and a receiver, and results of the delay spread estimation and Doppler spread estimation are important parameters for channel estimation and can be used to assist demodulation reference signal (Demodulation Reference Signal, DMRS) for completing more accurate channel estimation.

In this embodiment of this application, the network-side device may configure at least two TRS resource sets for the terminal, and each TRS resource set may include at least two TRS resources. In this case, the network-side device can indicate the number of configured TRS resource sets, an index of each TRS resource set, the number of TRS resources included in each TRS resource set, and an index of each TRS resource in each TRS resource set, allowing the terminal to know configuration of TRS resources and perform corresponding CSI measurement based on this configuration.

It should be noted that in implementation, in a case that the CSI measurement configuration information does not include the third TRS resource indication information and/or the fifth TRS resource indication information, the number of measurement resources in the TRS resource set and/or the number of measurement resources in the TRS resource set in each slot can still be determined according to agreement by default of the network-side device and the terminal. This is not specifically limited herein.

Certainly, in practical application, the network-side device can alternatively configure a combination of one TRS resource set and one CSI-RS resource for the terminal, a combination of one TRS resource set and at least two CSI-RS resources, or a combination of two TRS resource sets and one CSI-RS resource. This is not specifically limited herein.

It is worth noting that the configuration process and use of TRS in this embodiment of this application are different from those in the prior art. A TRS in the prior art is a reference signal flexibly configured by a network-side device based on the needs of a terminal and used for time-frequency tracking, and the terminal does not report a measurement result of the TRS; while in this embodiment of this application, the network-side device proactively configures a TRS resource for the terminal, and configures reporting, by the terminal, of a target CSI information obtained through measurement over the TRS resource.

In addition, similar to the fact that the target CSI measurement resource is a CSI-RS resource, the time-domain repetition count of the configured TRS resource set indicated above can be understood as the time-domain repetition count of the TRS resource set in a unit of slot. This is not detailed herein.

Moreover, the foregoing measurement granularity of the TRS resource set may refer to bandwidth or subband. This is not specifically limited herein.

In this implementation, the TRS resource is configured for the terminal, allowing the terminal to measure the target CSI information over the TRS resource and report the measured target CSI information to the network-side device, so that the network-side device can perform channel prediction based on the target CSI information.

### <Case 3>

In a case that the target CSI measurement resource is a reference signal resource combination, the reference signal resource combination refers to that resources used for a same measurement include a combination of at least two different types of resource, for example, the reference signal resource combination includes a combination of a CSI-RS resource and a TRS resource. The CSI-RS resource and the TRS resource are used together for a same measurement.

For example, as shown in FIG. 3d, it is assumed that the reference signal resource combination includes a NZP CSI-RS and a TRS resource set with a single slot structure, where each TRS resource in the TRS resource set has two slot-level time-domain repetitions in time domain.

Optionally, the reference signal resource combination includes a combination of a CSI-RS resource and a TRS resource; and the CSI measurement configuration information includes: CSI-RS resource indication information and TRS resource indication information, and
first resource relationship indication information for indicating an association between the CSI-RS resource and the TRS resource.

It should be noted that the CSI-RS resource indication information may be the CSI-RS resource indication information described in the foregoing <Case 1>, and the TRS resource indication information may be the TRS resource indication information described in the foregoing <Case 2>. This is not specifically described herein.

In this implementation, the CSI-RS resource and the TRS resource can be used together for a same CSI measurement, thus improving the flexibility of the CSI measurement resource used for measuring the target CSI information.

Optionally, the network-side device can separately configure periods and bandwidths of the CSI-RS resource and TRS resource, so that the periods of the CSI-RS resource and TRS resource can be different, and the bandwidths of the CSI-RS resource and TRS resource can also be different. For example, the bandwidth of the CSI-RS resource is greater than that of the TRS resource, or the bandwidth of the CSI-RS resource is less than that of the TRS resource.

Certainly, in implementation, the period and/or bandwidth of the CSI-RS resource and TRS resource can alternatively be the same. This is not specifically limited herein.

Optionally, the CSI measurement configuration information further includes at least one of the following resource relationship indication information:
second resource relationship indication information for indicating a relationship in period between the configured CSI-RS resource and TRS resource; and
third resource relationship indication information for indicating a relationship in bandwidth between the configured CSI-RS resource and TRS resource.

The relationship in period may include: the period of the CSI-RS resource must be the same as that of the TRS resource, or the period of the CSI-RS resource is allowed to be different from that of the TRS resource. The relationship in bandwidth may include: the bandwidths of the CSI-RS resource and TRS resource must be the same, or the bandwidth of the CSI-RS resource is greater than that of a TRS resource set, or the bandwidth of the CSI-RS resource is less than that of a TRS resource set.

Optionally, the first resource relationship indication information includes at least one of the following:
first sub-indication information for indicating an explicit binding relationship between a CSI-RS resource and a TRS resource set; and
second sub-indication information for indicating a quasi co-location (Quasi co-location, QCL) reference relationship between a CSI-RS resource and a TRS resource set.

In implementation, the binding relationship between a CSI-RS resource and a TRS resource set can be indicated through the first sub-indication information, so that the CSI-RS resource and TRS resource set with such binding relationship can be used together for a same measurement.

Certainly, in implementation, it is also possible to indicate that the CSI-RS resource and the TRS resource set are used together for a same measurement through the QCL reference relationship between the CSI-RS resource and the TRS resource set. This is not specifically limited herein.

In some embodiments, the QCL reference relationship may indicate that the TRS resource set serves as a QCL reference for the CSI-RS resource, for example, indicating that average delay, delay spread, Doppler shift, Doppler spread, spatial reception parameter, and the like of a channel of a symbol on an antenna port for the CSI-RS resource can be deduced from an antenna port for the TRS resource set.

In implementation, the QCL reference relationship can be determined depending on actual transmission scenarios, where the correspondence between the QCL reference relationship and the transmission application scenario is as follows:
(1) qcl-typeA, f Doppler shift, Doppler spread, average delay, delay spread};
(2) qcl-typeB, f Doppler shift, Doppler spread};
(3) qcl-typeC, {Doppler shift, average delay}; and
(4) qcl-typeD, {spatial reception parameter}.

Generally, a TRS takes the form of QCL-typeA to serve as a QCL reference source for a demodulation reference signal (Demodulation Reference Signal, DMRS) corresponding to a physical downlink shared channel (Physical downlink shared channel, PDSCH), or for a DMRS corresponding to a physical downlink control channel (Physical downlink control channel, PDCCH).

In this implementation, the QCL reference relationship between a CSI-RS resource and a TRS resource set can be indicated in the CSI measurement configuration information, so as to indicate that the CSI-RS resource and TRS resource set with such QCL reference relationship are used for a same measurement.

In an optional implementation, the target CSI measurement resource is further used for measuring first CSI information, where the first CSI information includes at least one of the following:
beam information, precoding matrix indicator PMI, CSI-RS resource indicator CRI, channel quality indicator CQI, rank indicator RI, layer indicator LI, reference signal received power RSRP, and signal-to-noise and interference ratio SINR.

Further, in the case that the target CSI measurement resource is at least two CSI-RS resources, some CSI-RS resources in the at least two CSI-RS resources are used for measuring the target CSI information, and the rest CSI-RS resources in the at least two CSI-RS resources are used for measuring the first CSI information.

In a case that the target CSI measurement resource is a first CSI-RS resource that is used for at least two time-domain repetitions, a CSI-RS resource corresponding to some time-domain repetitions of the first CSI-RS resource is used for measuring the target CSI information, and a CSI-RS resource corresponding to the rest time-domain repetitions of the first CSI-RS resource is used for measuring the first CSI information.

In a case that the target CSI measurement resource is a combination of a TRS resource set and a CSI-RS resource, the TRS resource set is used for measuring the target CSI information, and the CSI-RS resource is used for measuring the first CSI information.

In this implementation, at least two resources used for a same measurement or at least two time-domain repetitions of one resource used for a same measurement can be used for measuring different CSI information respectively, so that corresponding configuration of each CSI measurement resource can be performed based on measurement requirements of CSI information to be measured, so as to improve the matching degree of the CSI measurement resources and the measurement requirements of the CSI information to be measured.

Optionally, before the network-side device receives the target CSI information from the terminal, the method further includes the following step.

The network-side device sends a CSI report setting associated with the CSI measurement configuration information to the terminal, where the CSI report setting is used for configuring reporting of the target CSI information by the terminal.

The CSI report setting (Report setting/CSI-ReportConfig) may be configured as at least one of the following three types:
periodic CSI report (P-CSI): transmitted on only physical uplink control channel (Physical Uplink Control Channel, PUCCH);
semi-persistent CSI report (SP-CSI): transmitted on PUCCH or physical uplink shared channel (Physical Uplink Shared Channel, PUSCH); and
aperiodic CSI report (AP-CSI): transmitted on only PUSCH.

In addition, CSI resource setting (Resource setting/CSI-ResourceConfig) for the CSI measurement configuration is as follows:
M (M ≥ 1) resource setting(s) (Resource setting(s));
one resource setting includes S (S ≥ 1) CSI resource set(s) (Resource set(s)); and
one resource set includes Ks (Ks ≥ 1) CSI resource(s) (Resource(s)), including CSI-RS, TRS, and the like.

In implementation, the association between the CSI measurement configuration information and the CSI report setting may be a one-to-one association, or alternatively be a many-to-one association. For example, one CSI report setting is associated with one CSI measurement configuration information. This is not specifically limited herein.

In this implementation, measurement and reporting of CSI information is performed in a form of association between CSI report setting and CSI measurement configuration information, such that the terminal can report measured CSI information in a timely manner.

Optionally, after the network-side device receives the target CSI information from the terminal, the method further includes the following step.

The network-side device predicts, based on the target CSI information, a channel state change corresponding to the terminal.

In this implementation, the network-side device can predict the channel state change corresponding to the terminal based on the target CSI information, and then can perform data transmission matching the predicted channel state corresponding to the terminal, so as to improve communication performance.

To sum up, in the CSI measurement method provided in this embodiment of this application, a CSI-RS measurement resource that can be used for more accurate measurement of time-domain characteristics and/or frequency-domain characteristics of a channel is configured, so that the terminal can measure the time-domain characteristics and/or frequency-domain characteristics of the channel more accurately. The CSI-RS measurement resource may include a CSI-RS resource, a TRS resource, or a combination of a CSI-RS resource and a TRS resource.

I. Configuration of CSI-RS resource may include at least one of the following:
(a) ports and/or densities and/or bandwidths of at least two CSI-RS resources used for a same measurement may be different;
(b) a single CSI-RS resource used for measurement may have repetition in time domain, and a repetition count may be configured; and
(c) CSI-RSs with different time-domain characteristics may be configured in a same CSI measurement configuration and used for a same measurement.

II. Configuration of TRS resource may include at least one of the following:
(a) repetition of a TRS resource set in time domain is configured; and
(b) the number of TRS resources in a TRS resource set may be configured.

III. Configuration of j oint measurement using CSI-RS and TRS may include at least one of the following:
(a) an association between a CSI-RS resource and a TRS resource is configured, and the associated CSI-RS resource and TRS resource are used for a same measurement; and
(b) relationships in bandwidth and period between a CSI-RS resource and a TRS resource may be configured.

Refer to FIG. 5. Another CSI measurement method provided in an embodiment of this application may be performed by a terminal. As shown in FIG. 5, the CSI measurement method may include the following steps.

Step 501. A terminal receives CSI measurement configuration information from a network-side device.

Step 502. The terminal measures target CSI information on a target CSI measurement resource based on the CSI measurement configuration information. The target CSI information includes at least one of the following:
Doppler shift, Doppler spread, Doppler spectrum, time domain channel correlation matrix, delay spread, average delay, delay spectrum, and frequency domain channel correlation matrix.

Step 503. The terminal sends the target CSI information to the network-side device.

It should be noted that the CSI measurement method shown in FIG. 5 corresponds to the CSI measurement method shown in FIG. 2, differing only in that the CSI measurement method shown in FIG. 2 is performed by a network-side device, while the CSI measurement method shown in FIG. 5 is performed by a terminal. Details are not described herein.

Optionally, the target CSI measurement resource includes:
a channel state information reference signal CSI-RS resource;
a tracking reference signal TRS resource; or
a reference signal resource combination.

Optionally, the reference signal resource combination includes a combination of a CSI-RS resource and a TRS resource; and the CSI measurement configuration information includes: CSI-RS resource indication information and TRS resource indication information, and
first resource relationship indication information for indicating an association between the CSI-RS resource and the TRS resource.

Optionally, in a case that the target CSI measurement resource includes at least two CSI-RS resources, the CSI measurement configuration information includes at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

Optionally, in a case that the target CSI measurement resource includes a first CSI-RS resource, the CSI measurement configuration information includes:
seventh CSI-RS resource indication information for indicating a time-domain repetition count of the configured first CSI-RS resource.

Optionally, in a case that the target CSI measurement resource includes a TRS resource, the CSI measurement configuration information includes at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

Optionally, before the terminal sends the target CSI information to the network-side device, the CSI measurement method further includes the following step.

The terminal receives a CSI report setting associated with the CSI measurement configuration information from the network-side device.

That the terminal sends the target CSI information to the network-side device includes the following step.

The terminal sends the target CSI information to the network-side device based on the CSI report setting.

Optionally, the target CSI measurement resource is further used for measuring first CSI information, where the first CSI information includes at least one of the following:
beam information, precoding matrix indicator PMI, CSI-RS resource indicator CRI, channel quality indicator CQI, rank indicator RI, layer indicator LI, reference signal received power RSRP, and signal-to-noise and interference ratio SINR.

Optionally, that the terminal measures target CSI information on a target CSI measurement resource based on the CSI measurement configuration information includes the following steps.

In a case that the target CSI resource is at least two CSI-RS resources, the terminal measures the target CSI information using some CSI-RS resources and measures the first CSI information using the rest CSI-RS resources.

In a case that the target CSI resource is a first CSI-RS resource that is used for at least two time-domain repetitions, the terminal measures the target CSI information using a CSI-RS resource corresponding to some time-domain repetitions of the first CSI-RS resource, and measures the first CSI information using a CSI-RS resource corresponding to the rest time-domain repetitions of the first CSI-RS resource.

In a case that the target CSI resource is a combination of a CSI-RS resource and a TRS resource, the terminal measures the target CSI information using the TRS resource and measures the first CSI information using the CSI-RS resource.

The CSI measurement method applied to the terminal provided in this embodiment of this application is combined with the CSI measurement method applied to the network-side device as shown in FIG. 2 to jointly implement more accurate measurement and reporting of channel characteristic information, of channel of the terminal, such as channel delay, Doppler shift, and time domain channel correlation. The network-side device can predict a channel state change corresponding to the terminal based on the target CSI information, and then adjust precoding, modulation order, bit rate, and the like based on the predicted channel state, so as to better match data transmission after the channel state change.

It should be noted that the CSI measurement method provided in the embodiments of this application may be performed by a CSI measurement apparatus or a control module configured to perform the CSI measurement method in the CSI measurement apparatus. In the embodiments of this application, the CSI measurement apparatus performing the CSI measurement method is used as an example to describe the CSI measurement apparatus provided in the embodiments of this application.

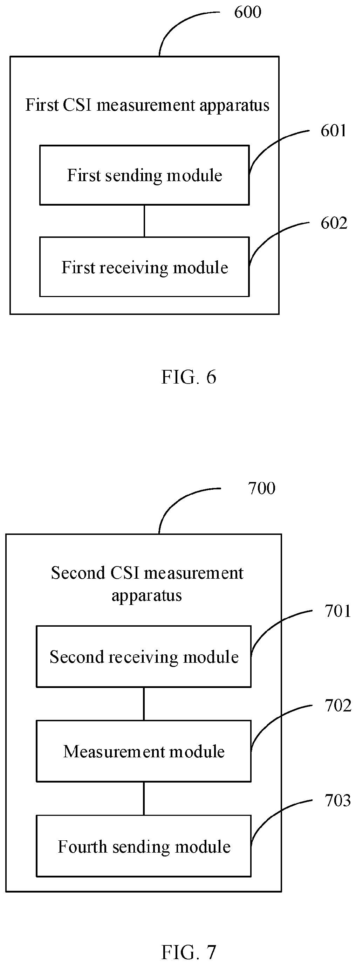

Refer to FIG. 6. A first CSI measurement apparatus 600 provided in an embodiment of this application is applied to a network-side device. As shown in FIG. 6, the first CSI measurement apparatus 600 includes:
a first sending module 601 configured to send CSI measurement configuration information to a terminal, where the CSI measurement configuration information is used for configuring a target CSI measurement resource associated with measurement of target CSI information; and
a first receiving module 602 configured to receive the target CSI information from the terminal.

The target CSI information includes at least one of the following:
Doppler shift, Doppler spread, Doppler spectrum, time domain channel correlation matrix, delay spread, average delay, delay spectrum, and frequency domain channel correlation matrix.

Optionally, the target CSI measurement resource includes:
a channel state information reference signal CSI-RS resource;
a tracking reference signal TRS resource; or
a reference signal resource combination.

Optionally, the reference signal resource combination includes a combination of a CSI-RS resource and a TRS resource; and the CSI measurement configuration information includes: CSI-RS resource indication information and TRS resource indication information, and
first resource relationship indication information for indicating an association between the CSI-RS resource and the TRS resource.

Optionally, in a case that the target CSI measurement resource includes at least two CSI-RS resources, the CSI measurement configuration information includes at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

Optionally, in a case that the target CSI measurement resource includes a first CSI-RS resource, the CSI measurement configuration information includes:
seventh CSI-RS resource indication information for indicating a time-domain repetition count of the first CSI-RS resource.

Optionally, in a case that the target CSI measurement resource includes a TRS resource, the CSI measurement configuration information includes at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

Optionally, the CSI measurement configuration information further includes:
eighth CSI-RS resource indication information for indicating respective time-domain repetition counts of the configured at least two CSI-RS resources, where time-domain symbol positions occupied by the at least two CSI-RS resources in a same time-domain repetition are within a same slot.

Optionally, the CSI measurement configuration information further includes:
ninth CSI-RS resource indication information for indicating a slot gap between the time-domain repetitions of the configured at least two CSI-RS resources.

Optionally, the time-domain repetitions of the first CSI-RS resource occur in one slot or N slots, where N is equal to the time-domain repetition count of the first CSI-RS resource.

Optionally, in a case that the time-domain repetitions of the first CSI-RS resource occur in one slot, the CSI measurement configuration information further includes at least one of the following:
tenth CSI-RS resource indication information for indicating that the time-domain repetitions occurring in one slot is performed for the configured first CSI-RS resource within L slot(s), where L is an integer greater than or equal to 1; and
eleventh CSI-RS resource indication information for indicating a symbol gap between the time-domain repetitions of the configured first CSI-RS resource.

Optionally, the first CSI measurement apparatus 600 further includes:
a second sending module configured to send first resource indication information to the terminal, where the first resource indication information is used for indicating that some CSI-RS resources in the at least two CSI-RS resources become valid or invalid.

Optionally, in a case that the at least two CSI-RS resources include CSI-RS resources of at least two time-domain types, the method further includes at least one of the following:
activating and/or deactivating a semi-persistent CSI-RS resource through a medium access control control element MAC CE; and
indicating, through downlink control information DCI, that an aperiodic CSI-RS resource becomes valid; where
the time-domain types include: periodic CSI-RS resource, aperiodic CSI-RS resource, and semi-persistent CSI-RS resource.

Optionally, a port quantity of a target CSI-RS resource in the at least two CSI-RS resources is X; and a port quantity of other CSI-RS resources than the target CSI-RS resource in the at least two CSI-RS resources is Y; where Y is equal to 1 or 2, and X is greater than or equal to Y

Optionally, respective port quantities and/or occupied bandwidths and/or frequency-domain densities of the at least two CSI-RS resources are different.

Optionally, port quantities and/or occupied bandwidths and/or frequency-domain densities for at least two time-domain repetitions of the first CSI-RS resource are different.

Optionally, the frequency-domain density includes at least one of resource block RB occupancy density and subband subband occupancy density.

Optionally, the first resource relationship indication information includes at least one of the following:
first sub-indication information for indicating an explicit binding relationship between a CSI-RS resource and a TRS resource set; and
second sub-indication information for indicating a quasi co-location QCL reference relationship between a CSI-RS resource and a TRS resource set.

Optionally, the target CSI measurement resource is further used for measuring first CSI information, where the first CSI information includes at least one of the following:
beam information, precoding matrix indicator PMI, CSI-RS resource indicator CRI, channel quality indicator CQI, rank indicator RI, layer indicator LI, reference signal received power RSRP, and signal-to-noise and interference ratio SINR.

Optionally, in the case that the target CSI measurement resource is at least two CSI-RS resources, some CSI-RS resources in the at least two CSI-RS resources are used for measuring the target CSI information, and the rest CSI-RS resources in the at least two CSI-RS resources are used for measuring the first CSI information;
in a case that the target CSI measurement resource is a first CSI-RS resource that is used for at least two time-domain repetitions, a CSI-RS resource corresponding to some time-domain repetitions of the first CSI-RS resource is used for measuring the target CSI information, and a CSI-RS resource corresponding to the rest time-domain repetitions of the first CSI-RS resource is used for measuring the first CSI information; and
in a case that the target CSI measurement resource is a combination of a TRS resource set and a CSI-RS resource, the TRS resource set is used for measuring the target CSI information, and the CSI-RS resource is used for measuring the first CSI information.

Optionally, the first CSI measurement apparatus 600 further includes:
a channel prediction module configured to predict, based on the target CSI information, a channel state change corresponding to the terminal.

The CSI measurement apparatus 600 provided in this embodiment of this application can implement the processes implemented in the method embodiment shown in FIG. 2, with the same technical effects achieved. To avoid repetition, details are not described herein again.

Refer to FIG. 7. A second CSI measurement apparatus 700 provided in an embodiment of this application is applied to a terminal. As shown in FIG. 7, the second CSI measurement apparatus 700 includes:
a second receiving module 701 configured to receive CSI measurement configuration information from a network-side device;
a measurement module 702 configured to measure target CSI information on a target CSI measurement resource based on the CSI measurement configuration information; and
a fourth sending module 703 configured to send the target CSI information to the network-side device.

The target CSI information includes at least one of the following:
Doppler shift, Doppler spread, Doppler spectrum, time domain channel correlation matrix, delay spread, average delay, delay spectrum, and frequency domain channel correlation matrix.

Optionally, the target CSI measurement resource includes:
a channel state information reference signal CSI-RS resource;
a tracking reference signal TRS resource; or
a reference signal resource combination.

Optionally, the reference signal resource combination includes a combination of a CSI-RS resource and a TRS resource; and the CSI measurement configuration information includes: CSI-RS resource indication information and TRS resource indication information, and
first resource relationship indication information for indicating an association between the CSI-RS resource and the TRS resource.

Optionally, in a case that the target CSI measurement resource includes at least two CSI-RS resources, the CSI measurement configuration information includes at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

Optionally, in a case that the target CSI measurement resource includes a first CSI-RS resource, the CSI measurement configuration information includes:
seventh CSI-RS resource indication information for indicating a time-domain repetition count of the configured first CSI-RS resource.

Optionally, in a case that the target CSI measurement resource includes a TRS resource, the CSI measurement configuration information includes at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

Optionally, the second CSI measurement apparatus 700 further includes:
a third receiving module configured to receive a CSI report setting associated with the CSI measurement configuration information from the network-side device; and
a fourth sending module 703 specifically configured to:
   send the target CSI information to the network-side device based on the CSI report setting.

Optionally, the target CSI measurement resource is further used for measuring first CSI information, where the first CSI information includes at least one of the following:
beam information, precoding matrix indicator PMI, CSI-RS resource indicator CRI, channel quality indicator CQI, rank indicator RI, layer indicator LI, reference signal received power RSRP, and signal-to-noise and interference ratio SINR.

Optionally, the measurement module 702 is specifically configured to:
in a case that the target CSI resource is at least two CSI-RS resources, measure the target CSI information using some CSI-RS resources and measure the first CSI information using the rest CSI-RS resources;
in a case that the target CSI resource is a first CSI-RS resource that is used for at least two time-domain repetitions, measure the target CSI information using a CSI-RS resource corresponding to some time-domain repetitions of the first CSI-RS resource, and measure the first CSI information using a CSI-RS resource corresponding to the rest time-domain repetitions of the first CSI-RS resource; and
in a case that the target CSI resource is a combination of a CSI-RS resource and a TRS resource, measure the target CSI information using the TRS resource and measure the first CSI information using the CSI-RS resource.

The second CSI measurement apparatus 700 in this embodiment of this application may be an apparatus, or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in the embodiments of this application.

The second CSI measurement apparatus 700 provided in this embodiment of this application can implement the processes implemented in the method embodiment shown in FIG. 5, with the same technical effects achieved. To avoid repetition, details are not described herein again.

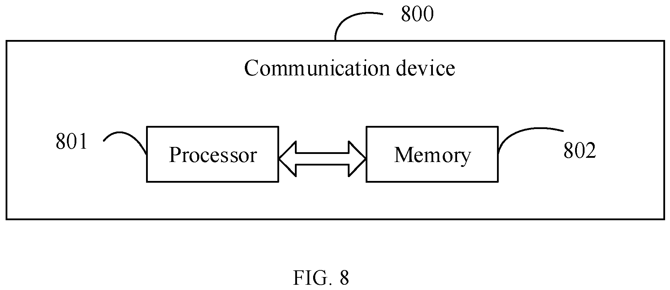

Optionally, as shown in FIG. 8, an embodiment of this application further provides a communication device 800 including a processor 801, a memory 802, and a program or an instruction stored in the memory 802 and capable of running on the processor 801. For example, in a case that the communication device 800 is a terminal, when the program or the instructions are executed by the processor 801, the processes of the method embodiment shown in FIG. 5 are implemented, with the same technical effects achieved. In a case that the communication device 800 is a network-side device, when the program or instructions are executed by the processor 801, the processes of the method embodiment shown in FIG. 2 are implemented, with the same technical effects achieved. To avoid repetition, details are not described herein again.

An embodiment of this application further provides a terminal including a processor and a communication interface, where the communication interface is configured to receive CSI measurement configuration information from a network-side device; the processor is configured to measure target CSI information on a target CSI measurement resource based on the CSI measurement configuration information; and the communication interface is further configured to send the target CSI information to the network-side device, where the target CSI information includes at least one of the following: Doppler shift, Doppler spread, Doppler spectrum, time domain channel correlation matrix, delay spread, average delay, delay spectrum, and frequency domain channel correlation matrix.

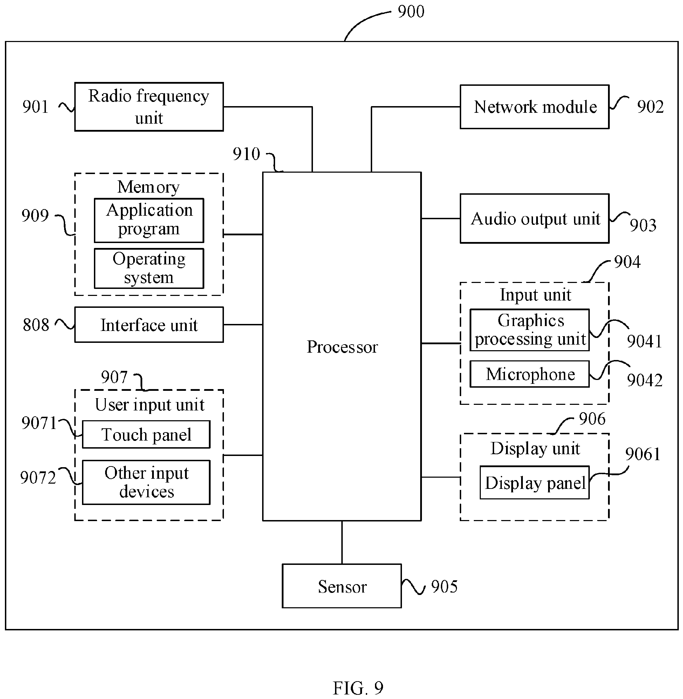

This terminal embodiment corresponds to the foregoing method embodiment on the terminal side. All processes and implementations in the foregoing method embodiment can be applicable to this terminal embodiment, with the same technical effects achieved. Specifically, FIG. 9 is a schematic diagram of a hardware structure of a terminal for implementing embodiments of this application.

The terminal 900 includes but is not limited to at least some of components such as a radio frequency unit 901, a network module 902, an audio output unit 903, an input unit 904, a sensor 905, a display unit 906, a user input unit 907, an interface unit 908, a memory 909, and a processor 910.

It can be understood by those skilled in the art that the terminal 900 may further include a power supply (for example, a battery) supplying power to the components. The power supply may be logically connected to the processor 910 via a power management system, so that functions such as charge management, discharge management, and power consumption management are implemented by using the power management system. The structure of the terminal shown in FIG. 9 does not constitute any limitation on the terminal, and the terminal may include more or fewer components than shown in the figure, or combine some of the components, or have different arrangements of the components. Details are not described herein.

It should be understood that in this embodiment of this application, the input unit 904 may include a graphics processing unit (Graphics Processing Unit, GPU) 9041 and a microphone 9042. The graphics processing unit 9041 processes image data of a still picture or video that is obtained by an image capture apparatus (for example, camera) in an image or video capture mode. The display unit 906 may include a display panel 9061, and the display panel 9061 may be configured in a form of a liquid crystal display, an organic light-emitting diode display, or the like. The user input unit 907 includes a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function button (for example, volume control button or a power on/off button), a trackball, a mouse, and a joystick. Details are not described herein.

In this embodiment of this application, the radio frequency unit 901 sends downlink data received from a network-side device to the processor 910 for processing, and in addition, sends uplink data to the network-side device. Generally, the radio frequency unit 901 includes but is not limited to an antenna, at least one amplifier, a transceiver, a coupler, a low noise amplifier, and a duplexer.

The memory 909 may be configured to store software programs or instructions and various data. The memory 909 may include a program or instruction storage area and a data storage area. The program or instruction storage area may store an operating system, an application program or instructions required by at least one function (for example, sound play function or image play function), and the like. In addition, the memory 909 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 910 may include one or more processing units. Optionally, the processor 910 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 910.

The radio frequency unit 901 is configured to receive CSI measurement configuration information from a network-side device.

The processor 910 is configured to measure target CSI information on a target CSI measurement resource based on the CSI measurement configuration information.

The radio frequency unit 901 is configured to send the target CSI information to the network-side device.

The target CSI information includes at least one of the following:
Doppler shift, Doppler spread, Doppler spectrum, time domain channel correlation matrix, delay spread, average delay, delay spectrum, and frequency domain channel correlation matrix.

Optionally, the target CSI measurement resource includes:
a channel state information reference signal CSI-RS resource;
a tracking reference signal TRS resource; or
a reference signal resource combination.

Optionally, the reference signal resource combination includes a combination of a CSI-RS resource and a TRS resource; and the CSI measurement configuration information includes: CSI-RS resource indication information and TRS resource indication information, and
first resource relationship indication information for indicating an association between the CSI-RS resource and the TRS resource.

Optionally, in a case that the target CSI measurement resource includes at least two CSI-RS resources, the CSI measurement configuration information includes at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

Optionally, in a case that the target CSI measurement resource includes a first CSI-RS resource, the CSI measurement configuration information includes:
seventh CSI-RS resource indication information for indicating a time-domain repetition count of the configured first CSI-RS resource.

Optionally, in a case that the target CSI measurement resource includes a TRS resource, the CSI measurement configuration information includes at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

Optionally, before the radio frequency unit 901 sends the target CSI information to the network-side device, the radio frequency unit 901 is further configured to receive a CSI report setting associated with the CSI measurement configuration information from the network-side device; and
that the radio frequency unit 901 sends the target CSI information to the network-side device includes:
the radio frequency unit 901 sends the target CSI information to the network-side device based on the CSI report setting.

Optionally, the target CSI measurement resource is further used for measuring first CSI information, where the first CSI information includes at least one of the following:
beam information, precoding matrix indicator PMI, CSI-RS resource indicator CRI, channel quality indicator CQI, rank indicator RI, layer indicator LI, reference signal received power RSRP, and signal-to-noise and interference ratio SINR.

Optionally, that the processor 910 measure target CSI information on a target CSI measurement resource based on the CSI measurement configuration information includes:
in a case that the target CSI resource is at least two CSI-RS resources, measuring the target CSI information using some CSI-RS resources and measure the first CSI information using the rest CSI-RS resources;
in a case that the target CSI resource is a first CSI-RS resource that is used for at least two time-domain repetitions, measuring the target CSI information using a CSI-RS resource corresponding to some time-domain repetitions of the first CSI-RS resource, and measuring the first CSI information using a CSI-RS resource corresponding to the rest time-domain repetitions of the first CSI-RS resource; and
in a case that the target CSI resource is a combination of a CSI-RS resource and a TRS resource, measuring the target CSI information using the TRS resource and measure the first CSI information using the CSI-RS resource.

The terminal 900 provided in this embodiment of this application can implement the steps performed by the terminal in the method embodiment shown in FIG. 5, with the same technical effects achieved. To avoid repetition, details are not described herein again.

An embodiment of this application further provides a network-side device including a processor and a communication interface, where the communication interface is configured to send CSI measurement configuration information to a terminal, where the CSI measurement configuration information is used for configuring a target CSI measurement resource associated with measurement of target CSI information; and the communication interface is further configured to receive the target CSI information from the terminal, where the target CSI information includes at least one of the following:
Doppler shift, Doppler spread, Doppler spectrum, time domain channel correlation matrix, delay spread, average delay, delay spectrum, and frequency domain channel correlation matrix.

This network-side device embodiment corresponds to the foregoing network-side device method embodiment. All processes and implementations in the foregoing method embodiment can be applicable to this network-side device embodiment, with the same technical effects achieved.

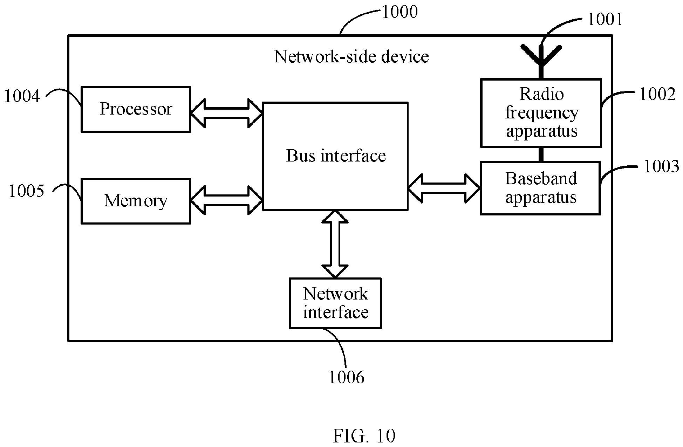

Specifically, an embodiment of this application further provides a network-side device. As shown in FIG. 10, the network device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information out by using the antenna 1001.

The frequency band processing apparatus may be located in the baseband apparatus 1003. The method executed by the network-side device in the foregoing embodiments may be implemented in the baseband apparatus 1003, and the baseband apparatus 1003 includes a processor 1004 and a memory 1005.

The baseband apparatus 1003 may include, for example, at least one baseband board, where a plurality of chips are disposed on the baseband board. As shown in FIG. 10, one of the chips is, for example, the processor 1004, and connected to the memory 1005, to invoke the program in the memory 1005 to perform the operations of the network device shown in the foregoing method embodiment.

The baseband apparatus 1003 may further include a network interface 1006 configured to exchange information with the radio frequency apparatus 1002, where the interface is, for example, a common public radio interface (common public radio interface, CPRI for short).

Specifically, the network-side device in this embodiment of the present invention further includes instructions or a program stored in the memory 1005 and capable of running on the processor 1004. The processor 1004 invokes the instructions or program in the memory 1005 to perform the method performed by the modules shown in FIG. 2, with the same technical effects achieved. To avoid repetition, details are not described herein again.

An embodiment of this application further provides a readable storage medium, where a program or instructions are stored in the readable storage medium, and when the program or instructions are executed by a processor, the processes of the method embodiment in FIG. 2 or FIG. 5 are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the method embodiment in FIG. 2 or FIG. 5, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a non-transitory storage medium, and the program/program product is executed by at least one processor to implement the processes of the method embodiment in FIG. 2 or FIG. 5, with the same technical effects achieved. To avoid repetition, details are not described herein again.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. Furthermore, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred embodiment. Based on such an understanding, the technical solutions of this application essentially or the part contributing to the prior art may be implemented in the form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A channel state information CSI measurement method, comprising:
sending, by a network-side device, CSI measurement configuration information to a terminal, wherein the CSI measurement configuration information is used for configuring a target CSI measurement resource associated with measurement of target CSI information; and
receiving, by the network-side device, the target CSI information from the terminal; wherein
the target CSI information comprises at least one of the following:
Doppler shift, Doppler spread, Doppler spectrum, time domain channel correlation matrix, delay spread, average delay, delay spectrum, and frequency domain channel correlation matrix.

2. The method according to claim 1, wherein the target CSI measurement resource comprises:
a channel state information reference signal CSI-RS resource;
a tracking reference signal TRS resource; or
a reference signal resource combination.

3. The method according to claim 2, wherein the reference signal resource combination comprises a combination of a CSI-RS resource and a TRS resource; and the CSI measurement configuration information comprises: CSI-RS resource indication information and TRS resource indication information, and
first resource relationship indication information for indicating an association between the CSI-RS resource and the TRS resource.

4. The method according to claim 2 or 3, wherein in a case that the target CSI measurement resource comprises at least two CSI-RS resources, the CSI measurement configuration information comprises at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

5. The method according to claim 2 or 3, wherein in a case that the target CSI measurement resource comprises a first CSI-RS resource, the CSI measurement configuration information comprises:
seventh CSI-RS resource indication information for indicating a time-domain repetition count of the first CSI-RS resource.

6. The method according to claim 2 or 3, wherein in a case that the target CSI measurement resource comprises a TRS resource, the CSI measurement configuration information comprises at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

7. The method according to claim 4, wherein the CSI measurement configuration information further comprises:
eighth CSI-RS resource indication information for indicating a time-domain repetition count of the configured at least two CSI-RS resources, wherein time-domain symbol positions occupied by the at least two CSI-RS resources in a same time-domain repetition are within a same slot.

8. The method according to claim 7, wherein the CSI measurement configuration information further comprises:
ninth CSI-RS resource indication information for indicating a slot gap between the time-domain repetitions of the configured at least two CSI-RS resources.

9. The method according to claim 5, wherein the time-domain repetitions of the first CSI-RS resource occur in one slot or N slots, wherein N is equal to the time-domain repetition count of the first CSI-RS resource.

10. The method according to claim 9, wherein in a case that the time-domain repetitions of the first CSI-RS resource occur in one slot, the CSI measurement configuration information further comprises at least one of the following:
tenth CSI-RS resource indication information for indicating that the time-domain repetitions occurring in one slot is performed for the configured first CSI-RS resource within L slot(s), wherein L is an integer greater than or equal to 1; and
eleventh CSI-RS resource indication information for indicating a symbol gap between the time-domain repetitions of the configured first CSI-RS resource.

11. The method according to claim 4, wherein the method further comprises:
sending, by the network-side device, first resource indication information to the terminal, wherein the first resource indication information is used for indicating that some CSI-RS resources in the at least two CSI-RS resources become valid or invalid.

12. The method according to claim 4, wherein in a case that the at least two CSI-RS resources comprise CSI-RS resources of at least two time-domain types, the method further comprises at least one of the following:
activating and/or deactivating a semi-persistent CSI-RS resource through a medium access control control element MAC CE; and
indicating, through downlink control information DCI, that an aperiodic CSI-RS resource becomes valid; wherein
the time-domain types comprise: periodic CSI-RS resource, aperiodic CSI-RS resource, and semi-persistent CSI-RS resource.

13. The method according to claim 4, wherein a port quantity of a target CSI-RS resource in the at least two CSI-RS resources is X; and a port quantity of other CSI-RS resources than the target CSI-RS resource in the at least two CSI-RS resources is Y; wherein Y is equal to 1 or 2, and X is greater than or equal to Y

14. The method according to claim 4, wherein respective port quantities and/or occupied bandwidths and/or frequency-domain densities of the at least two CSI-RS resources are different.

15. The method according to claim 5, wherein port quantities and/or occupied bandwidths and/or frequency-domain densities for at least two time-domain repetitions of the first CSI-RS resource are different.

16. The method according to claim 14 or 15, wherein the frequency-domain density comprises at least one of resource block RB occupancy density and subband subband occupancy density.

17. The method according to claim 3, wherein the first resource relationship indication information comprises at least one of the following:
first sub-indication information for indicating an explicit binding relationship between a CSI-RS resource and a TRS resource set; and
second sub-indication information for indicating a quasi co-location QCL reference relationship between a CSI-RS resource and a TRS resource set.

18. The method according to claim 13, wherein the target CSI measurement resource is further used for measuring first CSI information, wherein the first CSI information comprises at least one of the following:
beam information, precoding matrix indicator PMI, CSI-RS resource indicator CRI, channel quality indicator CQI, rank indicator RI, layer indicator LI, reference signal received power RSRP, and signal-to-noise and interference ratio SINR.

19. The method according to claim 18, wherein in the case that the target CSI measurement resource is at least two CSI-RS resources, some CSI-RS resources in the at least two CSI-RS resources are used for measuring the target CSI information, and the rest CSI-RS resources in the at least two CSI-RS resources are used for measuring the first CSI information;
in a case that the target CSI measurement resource is a first CSI-RS resource that is used for at least two time-domain repetitions, a CSI-RS resource corresponding to some time-domain repetitions of the first CSI-RS resource is used for measuring the target CSI information, and a CSI-RS resource corresponding to the rest time-domain repetitions of the first CSI-RS resource is used for measuring the first CSI information; and
in a case that the target CSI measurement resource is a combination of a TRS resource set and a CSI-RS resource, the TRS resource set is used for measuring the target CSI information, and the CSI-RS resource is used for measuring the first CSI information.

20. The method according to claim 1, wherein before the receiving, by the network-side device, the target CSI information from the terminal, the method further comprises:
sending, by the network-side device, a CSI report setting associated with the CSI measurement configuration information to the terminal, wherein the CSI report setting is used for configuring reporting of the target CSI information by the terminal.

21. The method according to claim 1, wherein after the receiving, by the network-side device, the target CSI information from the terminal, the method further comprises:
predicting, by the network-side device based on the target CSI information, a channel state change corresponding to the terminal.

22. A channel state information CSI measurement apparatus applied to a network-side device, wherein the apparatus comprises:
a first sending module configured to send CSI measurement configuration information to a terminal, wherein the CSI measurement configuration information is used for configuring a target CSI measurement resource associated with measurement of target CSI information; and
a first receiving module configured to receive the target CSI information from the terminal; wherein
the target CSI information comprises at least one of the following:
Doppler shift, Doppler spread, Doppler spectrum, time domain channel correlation matrix, delay spread, average delay, delay spectrum, and frequency domain channel correlation matrix.

23. The apparatus according to claim 22, wherein the target CSI measurement resource com prises:
a channel state information reference signal CSI-RS resource;
a tracking reference signal TRS resource; or
a reference signal resource combination.

24. The apparatus according to claim 23, wherein the reference signal resource combination comprises a combination of a CSI-RS resource and a TRS resource; and the CSI measurement configuration information comprises: CSI-RS resource indication information and TRS resource indication information, and
first resource relationship indication information for indicating an association between the CSI-RS resource and the TRS resource.

25. The apparatus according to claim 23 or 24, wherein in a case that the target CSI measurement resource comprises at least two CSI-RS resources, the CSI measurement configuration information comprises at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

26. The apparatus according to claim 23 or 24, wherein in a case that the target CSI measurement resource comprises a first CSI-RS resource, the CSI measurement configuration information comprises:
seventh CSI-RS resource indication information for indicating a time-domain repetition count of the configured first CSI-RS resource.

27. The apparatus according to claim 23 or 24, wherein in a case that the target CSI measurement resource comprises a TRS resource, the CSI measurement configuration information comprises at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

28. The apparatus according to claim 25, further comprising:
a second sending module configured to send first resource indication information to the terminal, wherein the first resource indication information is used for indicating that some CSI-RS resources in the at least two CSI-RS resources become valid or invalid.

29. A channel state information CSI measurement method, comprising:
receiving, by a terminal, CSI measurement configuration information from a network-side device;
measuring, by the terminal, target CSI information on a target CSI measurement resource based on the CSI measurement configuration information; and
sending, by the terminal, the target CSI information to the network-side device; wherein
the target CSI information comprises at least one of the following:
Doppler shift, Doppler spread, Doppler spectrum, time domain channel correlation matrix, delay spread, average delay, delay spectrum, and frequency domain channel correlation matrix.

30. The method according to claim 29, wherein the target CSI measurement resource comprises:
a channel state information reference signal CSI-RS resource;
a tracking reference signal TRS resource; or
a reference signal resource combination.

31. The method according to claim 30, wherein the reference signal resource combination is a combination of a CSI-RS resource and a TRS resource; and the CSI measurement configuration information comprises: CSI-RS resource indication information and TRS resource indication information, and
first resource relationship indication information for indicating an association between the CSI-RS resource and the TRS resource.

32. The method according to claim 30 or 31, wherein in a case that the target CSI measurement resource comprises at least two CSI-RS resources, the CSI measurement configuration information comprises at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

33. The method according to claim 30 or 31, wherein in a case that the target CSI measurement resource comprises a first CSI-RS resource, the CSI measurement configuration information comprises:
seventh CSI-RS resource indication information for indicating a time-domain repetition count of the configured first CSI-RS resource.

34. The method according to claim 30 or 31, wherein in a case that the target CSI measurement resource comprises a TRS resource, the CSI measurement configuration information comprises at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

35. The method according to claim 29, wherein before the sending, by the terminal, the target CSI information to the network-side device, the method further comprises:
receiving, by the terminal, a CSI report setting associated with the CSI measurement configuration information from the network-side device; and
the sending, by the terminal, the target CSI information to the network-side device comprises:
sending, by the terminal, the target CSI information to the network-side device based on the CSI report setting.

36. The method according to claim 30 or 31, wherein the target CSI measurement resource is further used for measuring first CSI information, wherein the first CSI information comprises at least one of the following:
beam information, precoding matrix indicator PMI, CSI-RS resource indicator CRI, channel quality indicator CQI, rank indicator RI, layer indicator LI, reference signal received power RSRP, and signal-to-noise and interference ratio SINR.

37. The method according to claim 36, wherein the measuring, by the terminal, target CSI information on a target CSI measurement resource based on the CSI measurement configuration information comprises:
in a case that the target CSI resource is at least two CSI-RS resources, measuring, by the terminal, the target CSI information using some CSI-RS resources, and measuring the first CSI information using the rest CSI-RS resources;
in a case that the target CSI resource is a first CSI-RS resource that is used for at least two time-domain repetitions, measuring, by the terminal, the target CSI information using a CSI-RS resource corresponding to some time-domain repetitions of the first CSI-RS resource, and measuring the first CSI information using a CSI-RS resource corresponding to the rest time-domain repetitions of the first CSI-RS resource; and
in a case that the target CSI resource is a combination of a CSI-RS resource and a TRS resource, measuring, by the terminal, the target CSI information using the TRS resource, and measuring the first CSI information using the CSI-RS resource.

38. A channel state information CSI measurement apparatus applied to a terminal, wherein the apparatus comprises:
a second receiving module configured to receive CSI measurement configuration information from a network-side device;
a measurement module configured to measure target CSI information on a target CSI measurement resource based on the CSI measurement configuration information; and
a fourth sending module configured to send the target CSI information to the network-side device; wherein
the target CSI information comprises at least one of the following:
Doppler shift, Doppler spread, Doppler spectrum, time domain channel correlation matrix, delay spread, average delay, delay spectrum, and frequency domain channel correlation matrix.

39. The apparatus according to claim 38, wherein the target CSI measurement resource comprises:
a channel state information reference signal CSI-RS resource;
a tracking reference signal TRS resource; or
a reference signal resource combination.

40. The apparatus according to claim 39, wherein the reference signal resource combination is a combination of a CSI-RS resource and a TRS resource; and the CSI measurement configuration information comprises: CSI-RS resource indication information and TRS resource indication information, and
first resource relationship indication information for indicating an association between the CSI-RS resource and the TRS resource.

41. The apparatus according to claim 39 or 40, wherein in a case that the target CSI measurement resource is CSI-RS resource(s), the CSI measurement configuration information comprises at least one of the following CSI-RS resource indication information:
first CSI-RS resource indication information for indicating the number of configured CSI-RS resources;
second CSI-RS resource indication information for indicating indexes of the CSI-RS resources;
third CSI-RS resource indication information for indicating a port quantity of the CSI-RS resources;
fourth CSI-RS resource indication information for indicating a time domain gap between the CSI-RS resources;
fifth CSI-RS resource indication information for indicating bandwidths of the CSI-RS resources; and
sixth CSI-RS resource indication information for indicating frequency-domain density of the CSI-RS resources.

42. The apparatus according to claim 39 or 40, wherein in a case that the target CSI measurement resource is one CSI-RS resource, the CSI measurement configuration information comprises:
seventh CSI-RS resource indication information for indicating a time-domain repetition count of the configured one CSI-RS resource.

43. The apparatus according to claim 39 or 40, wherein in a case that the target CSI measurement resource comprises a TRS resource, the CSI measurement configuration information comprises at least one of the following TRS resource indication information:
first TRS resource indication information for indicating the number of configured TRS resource sets;
second TRS resource indication information for indicating an index of the TRS resource set;
third TRS resource indication information for indicating the number of measurement resources in the TRS resource set;
fourth TRS resource indication information for indicating indexes of measurement resources in the TRS resource set;
fifth TRS resource indication information for indicating the number of measurement resources in the TRS resource set in each slot;
sixth TRS resource indication information for indicating a time-domain repetition count of the TRS resource set; and
seventh TRS resource indication information for indicating a measurement granularity of the TRS resource set.

44. A network-side device, comprising a processor, a memory, and a program or instructions stored in the memory and capable of running on the processor, wherein when the program or instructions are executed by the processor, the steps of the channel state information CSI measurement method according to any one of claims 1 to 21 are implemented.

45. A terminal, comprising a processor, a memory, and a program or instructions stored in the memory and capable of running on the processor, wherein when the program or instructions are executed by the processor, the steps of the channel state information CSI measurement method according to any one of claims 29 to 37 are implemented.

46. A readable storage medium, wherein a program or instructions are stored in the readable storage medium, and when the program or the instructions are executed by a processor, the steps of the channel state information CSI measurement method according to any one of claims 1 to 21 are implemented, or the steps of the CSI measurement method according to any one of claims 29 to 37 are implemented.

47. A chip, wherein the chip comprises a processor and a communication interface, the communication interface is coupled to the processor, and the processor is configured to run a program or instructions to implement the steps of the channel state information CSI measurement method according to any one of claims 1 to 21 or the steps of the CSI measurement method according to any one of claims 29 to 37.

48. A computer program product, wherein the computer program product is stored in a non-transitory storage medium, and the computer program product is executed by at least one processor to implement the steps of the channel state information CSI measurement method according to any one of claims 1 to 21 or the steps of the CSI measurement method according to any one of claims 29 to 37.

49. A communication device, configured to perform the steps of the channel state information CSI measurement method according to any one of claims 1 to 21 or perform the steps of the CSI measurement method according to any one of claims 29 to 37.
